(19) Europäisches Patentamt
European Patent Office
Office européen des brevets

(11) **EP 4 539 554 A1**

(12) **EUROPEAN PATENT APPLICATION**
published in accordance with Art. 153(4) EPC

(43) Date of publication:
**16.04.2025 Bulletin 2025/16**

(21) Application number: **22946121.5**

(22) Date of filing: **13.06.2022**

(51) International Patent Classification (IPC):
**H04W 52/02** (2009.01)

(52) Cooperative Patent Classification (CPC):
**H04W 52/02;** Y02D 30/70

(86) International application number:
**PCT/CN2022/098486**

(87) International publication number:
**WO 2023/240421 (21.12.2023 Gazette 2023/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.
Beijing 100085 (CN)**

(72) Inventors:
• **LI, Yanhua
  Beijing 100085 (CN)**
• **FU, Ting
  Beijing 100085 (CN)**

(74) Representative: **Dehns Germany Partnerschaft
mbB
Theresienstraße 6-8
80333 München (DE)**

(54) **MONITORING METHOD, APPARATUS, COMMUNICATION DEVICE AND STORAGE MEDIUM**

(57) Provided in the embodiments of the present disclosure are a monitoring method, an apparatus, a communication device and a storage medium. The monitoring method comprises: receiving a first type of power saving signal on the basis of a first transceiver of a UE; and after waking up a second transceiver of the UE on the basis of the first type of power saving signal, determining a monitoring related operation.

```
┌─────────┐                      ┌────────────────┐
│   UE    │                      │ Network Device │
└────┬────┘                      └───────┬────────┘
     │                                   │
     │  S21: Receive a first type of     │
     │  power saving signal based on a   │
     │  first transceiver of the UE      │
     │ ◄─────────────────────────────────│
     │                                   │
  ┌──┴────────────────────────────────┐  │
  │ S22: Wake up a second transceiver │  │
  │ of the UE based on the first type │  │
  │ of power saving signal, and       │  │
  │ determine a monitoring-related    │  │
  │ operation                         │  │
  └──┬────────────────────────────────┘  │
     │                                   │
```

FIG. 2

Processed by Luminess, 75001 PARIS (FR)

## Description

## TECHNICAL FIELD

The present disclosure relates to, but is not limited to, the field of communication technologies, and in particular to a monitoring method and apparatus, a communication device, and a storage medium.

## BACKGROUND

At present, when a User Equipment (UE) in a non-connected state monitors a paging message, it usually monitors in a Discontinuous Reception (DRX) cycle. Typically, when the UE detects a wake-up signal, it means that it needs to monitor a physical downlink control channel (PDCCH). If the wake-up signal is not received, the PDCCH monitoring is skipped. The UE needs to detect the wake-up signal regardless of the wake-up signal, and accordingly, it is desired to introduce a separate transceiver, i.e., a ultra-low power wake-up receiver, to receive the wake-up signal. However, after the separate transceiver is introduced for the UE, there is no solution for an operating state of the UE.

## SUMMARY

Embodiments of the present disclosure disclose a monitoring method and apparatus, a communication device, and a storage medium.

According to a first aspect of the present disclosure, there is provided a monitoring method, which is performed by a UE and includes:

receiving a first type of power saving signal based on a first transceiver of the UE; and
waking up a second transceiver of the UE based on the first type of power saving signal, and determining a monitoring-related operation.

In some embodiments, determining the monitoring-related operation includes at least one of:

determining to enable monitoring of scheduling information; or
determining whether to skip monitoring of a second type of power saving signal.

In some embodiments, the scheduling information includes at least one of:

a paging message; or
Downlink Control Information (DCI).

In some embodiments, the second type of power saving signal includes at least one of:

Paging Early Indication (PEI); or

DCI for Powersaving (DCP).

In some embodiments, determining the monitoring-related operation includes one of:

determining the monitoring-related operation based on a protocol agreement; or
determining the monitoring-related operation based on a network signaling.

In some embodiments, determining the monitoring-related operation includes one of:

in response to the UE being a non-connected UE supporting the monitoring of the second type of power saving signal, skipping monitoring of the PEI and enabling monitoring of a paging message of a Paging Occasion (PO); or
in response to the UE being a connected UE supporting the monitoring of the second type of power saving signal, skipping monitoring of the DCP and enabling monitoring of the DCI.

In some embodiments, the method includes: receiving the network signaling; and

determining the monitoring-related operation based on the network signaling includes:
determining, based on first indication information carried in the network signaling, whether to skip the monitoring of the second type of power saving signal.

In some embodiments, the network signaling includes: a broadcast signaling and/or a dedicated signaling.

In some embodiments, determining the monitoring-related operation based on the network signaling includes at least one of:

determining, based on the network signaling being a first network signaling, to skip the monitoring of the second type of power saving signal and enable monitoring of the scheduling information; or
determining, based on the network signaling being a second network signaling, to continue the monitoring of the second type of power saving signal.

In some embodiments, determining the monitoring-related operation includes:
determining, based on second indication information carried in the first type of power saving signal, whether to skip monitoring of the second type of power saving signal.

In some embodiments, determining the monitoring-related operation includes at least one of:
in response to the UE being a UE in a predetermined paging group, determining to skip the monitoring of the second type of power saving signal and enable monitoring of the scheduling information, wherein the UE in the predetermined paging group includes at least one of: a grouped UE with a predetermined paging probability; or a grouped UE scrambled with a first Power Saving-Radio Network Temporary Identity (PS-RNTI).

According to a second aspect of the present disclosure, there is provided a monitoring method, which is performed by a network device and includes: sending a first type of power saving signal, wherein the first type of power saving signal is used by a User Equipment (UE), based on receiving the first type of power saving signal through a first transceiver, to wake up a second transceiver and determine a monitoring-related operation.

In some embodiments, determining the monitoring-related operation includes at least one of:

determining to enable monitoring of scheduling information; or
determining whether to skip monitoring of a second type of power saving signal.

In some embodiments, the scheduling information includes at least one of: a paging message; or DCI.

In some embodiments, the second type of power saving signal includes at least one of: PEI or DCP.

In some embodiments, the first type of power saving signal is used by the UE, upon waking up the second transceiver based on the first type of power saving signal, to determine the monitoring-related operation based on the protocol agreement; or,
the method includes: sending a network signaling, wherein the network signaling is configured to determine the monitoring-related operation after waking up the second transceiver by the first type of power saving signal.

In some embodiments, the first type of power saving signal is used by a non-connected UE supporting monitoring of the second type of power saving signal, upon waking up the second transceiver, to determine to skip monitoring of the PEI and enable monitoring of a paging message of a PO; and/or,
the first type of power saving signal is used by a connected UE supporting the monitoring of the second type of power saving signal, upon waking up the second transceiver, to determine to skip monitoring of the DCP and enable monitoring of the paging message of the PO.

In some embodiments, first indication information is carried in the network signaling, and the first indication information is configured to indicate whether to skip the monitoring of the second type of power saving signal.

In some embodiments, the network signaling includes: a broadcast signaling and/or a dedicated signaling.

In some embodiments, sending the network signaling includes:

in response to determining that data arrives at the UE after the second transceiver is woken up, sending a first network signaling, wherein the first network signaling is used by the UE to skip the monitoring of the second type of power saving signal and enable monitoring of the scheduling information; or,
in response to being unable to determine that the data arrives at the UE after the second transceiver is woken up, sending a second network signaling, wherein the second network signaling is used by the UE to determine to continue the monitoring of the second type of power saving signal.

In some embodiments, second indication information is carried in the first type of power saving signal, and the second indication information is configured to indicate whether to skip the monitoring of the second type of power saving signal.

In some embodiments, determining the monitoring-related operation includes at least one of:
for a UE in a predetermined paging group, determining to skip the monitoring of the second type of power saving signal and enable monitoring of the scheduling information, wherein the UE in the predetermined paging group includes at least one of: a grouped UE with a predetermined paging probability; or a grouped UE scrambled with a first Power Saving-Radio Network Temporary Identity (PS-RNTI).

According to a third aspect of the present disclosure, there is provided a monitoring apparatus, including:

a receiving module, configured to receive a first type of power saving signal based on a first transceiver of the UE; and
a first processing module, configured to wake up a second transceiver of the UE based on the first type of power saving signal, and determine a monitoring-related operation.

In some embodiments, determining the monitoring-related operation includes at least one of:

determining to enable monitoring of scheduling information; or
determining whether to skip monitoring of a second type of power saving signal.

In some embodiments, the scheduling information includes at least one of: a paging message; or DCI.

In some embodiments, the second type of power saving signal includes at least one of: PEI; or DCP.

In some embodiments, the first processing module is configured to determine the monitoring-related operation based on a protocol agreement; or
the first processing module is configured to determine the monitoring-related operation based on a network signaling.

In some embodiments, the first processing module is configured to, in response to the UE being a non-connected UE supporting the monitoring of the second type of power saving signal, skip monitoring of the PEI and enable monitoring of a paging message of a PO; or

the first processing module is configured to, in response to the UE being a connected UE supporting the monitoring of the second type of power saving signal, skip monitoring of the DCP and enable monitoring of the DCI.

In some embodiments, the receiving module is configured to receive the network signaling; and

the first processing module is configured to determine, based on first indication information carried in the network signaling, whether to skip the monitoring of the second type of power saving signal.

In some embodiments, the network signaling includes: a broadcast signaling and/or a dedicated signaling.

In some embodiments, the first processing module is configured to determine, based on the network signaling being a first network signaling, to skip the monitoring of the second type of power saving signal and enable the monitoring of the scheduling information; and/or,

the first processing module is configured to determine, based on the network signaling being a second network signaling, to continue the monitoring of the second type of power saving signal.

In some embodiments, the first processing module is configured to determine, based on second indication information carried in the first type of power saving signal, whether to skip the monitoring of the second type of power saving signal.

In some embodiments, the first processing module is configured to, in response to the UE being a UE in a predetermined paging group, determine to skip the monitoring of the second type of power saving signal and enable the monitoring of the scheduling information, wherein the UE in the predetermined paging group includes at least one of: a grouped UE with a predetermined paging probability; or a grouped UE scrambled with a first Power Saving-Radio Network Temporary Identity (PS-RNTI).

According to a fourth aspect of the present disclosure, there is provided a monitoring apparatus, including:

a sending module, configured to send a first type of power saving signal, wherein the first type of power saving signal is used by a User Equipment (UE), based on receiving the first type of power saving signal through a first transceiver, to wake up a second transceiver and determine a monitoring-related operation.

In some embodiments, determining the monitoring-related operation includes at least one of:

determining to enable monitoring of scheduling information; or

determining whether to skip monitoring of a second type of power saving signal.

In some embodiments, the scheduling information includes at least one of: a paging message; or DCI.

In some embodiments, the second type of power saving signal includes at least one of: PEI; or DCP.

In some embodiments, the first type of power saving signal is used by the UE, upon waking up the second transceiver based on the first type of power saving signal, to determine the monitoring-related operation based on a protocol agreement.

In some embodiments, the sending module is configured to send a network signaling, wherein the network signaling is configured to determine the monitoring-related operation after the second transceiver is woken up by the first type of power saving signal.

In some embodiments, the first type of power saving signal is used by a non-connected UE supporting the monitoring of the second type of power saving signal, upon waking up the second transceiver, to determine to skip monitoring of the PEI and enable monitoring of a paging message of a PO; and/or,

the first type of power saving signal is used by a connected UE supporting the monitoring of the second type of power saving signal, upon waking up the second transceiver, to determine to skip monitoring of the DCP and enable the monitoring of the paging message of the PO.

In some embodiments, first indication information is carried in the network signaling, and the first indication information is configured to indicate whether to skip the monitoring of the second type of power saving signal.

In some embodiments, the network signaling includes: a broadcast signaling and/or a dedicated signaling.

In some embodiments, the sending module is configured to, in response to determining that data is to arrive at the UE after the second transceiver is woken up, send a first network signaling, wherein the first network signaling is used by the UE to skip the monitoring of the second type of power saving signal and enable the monitoring of the scheduling information; or,

the sending module is configured to, in response to failing to determine that the data is to arrive at the UE after the second transceiver is woken up, send a second network signaling, wherein the second network signaling is used by the UE to determine to continue the monitoring of the second type of power saving signal.

In some embodiments, second indication information is carried in the first type of power saving signal, and the second indication information is configured to indicate whether to skip the monitoring of the second type of power saving signal.

In some embodiments, determining the monitoring-related operation includes at least one of:

for a UE in a predetermined paging group, determining to skip the monitoring of the second type of power saving signal and enable the monitoring of the scheduling information, wherein the UE in the predetermined paging group includes at least one of: a grouped UE with a predetermined paging probability; or a grouped UE scrambled with a first Power Saving-Radio Network Temporary Identity (PS-RNTI).

According to a fifth aspect of the present disclosure, there is provided a communication device, including:

a processor; and
a memory configured to store executable instructions of the processor;
wherein the processor is configured to implement the monitoring method in any embodiment of the present disclosure when running the executable instructions.

According to a sixth aspect of the present disclosure, there is provided a computer storage medium having a computer executable program stored thereon, which, when executed by a processor, implements the monitoring method in any embodiment of the present disclosure.

The technical solution provided by embodiments of the present disclosure may have the following beneficial effects:

in the embodiments of the present disclosure, the UE can receive the first type of power saving signal based on the first transceiver of the UE, wake up the second transceiver of the UE based on the first type of power saving signal, and then determine the monitoring-related operation. In this way, in the embodiments of the present disclosure, the second transceiver with the relatively high power consumption is woken up only after the first transceiver with the relatively low power consumption monitors the first type of power saving signal, and there is no need for the second transceiver with the relatively high power consumption to be woken up from the beginning to perform the monitoring operation, thereby reducing the power consumption of the UE and saving the power of the UE. Moreover, in the embodiments of the present disclosure, the monitoring-related operation can be determined after the second transceiver of the UE is woken up by the first type of power saving signal, thereby realizing the determination of the monitoring operation of the UE after the UE introduces the first transceiver.

It should be noted that the above general description and the following detailed description are merely exemplary and explanatory and should not be construed as limiting of embodiments of the present disclosure.

## BRIEF DESCRIPTION OF THE DRAWINGS

FIG. 1 shows a schematic structural diagram of a wireless communication system according to an embodiment of the present disclosure;
FIG. 2 shows a flowchart of a monitoring method according to an embodiment of the present disclosure;
FIG. 3 shows a flowchart of a monitoring method according to an embodiment of the present disclosure;
FIG. 4 shows a flowchart of a monitoring method according to an embodiment of the present disclosure;
FIG. 5 shows a flowchart of a monitoring method according to an embodiment of the present disclosure;
FIG. 6 shows a flowchart of a monitoring method according to an embodiment of the present disclosure;
FIG. 7 shows a flowchart of a monitoring method according to an embodiment of the present disclosure;
FIG. 8 shows a block diagram of a monitoring apparatus according to an embodiment of the present disclosure;
FIG. 9 shows a block diagram of a monitoring apparatus according to an embodiment of the present disclosure;
FIG. 10 shows a block diagram of a UE according to an embodiment of the present disclosure; and
FIG. 11 shows a block diagram of a base station according to an embodiment of the present disclosure.

## DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of the embodiments do not represent all implementations consistent with the present disclosure. Instead, they are merely examples of apparatuses and methods consistent with some aspects of the embodiments of the present disclosure as recited in the appended claims.

The terms used in the embodiments of the present disclosure are merely for the purpose of describing particular embodiments and are not intended to limit the embodiments of the present disclosure. As used in the present disclosure and the appended claims, the singular forms "a" and "the" are intended to include the plural forms as well, unless the context clearly indicates otherwise. It should also be understood that the term "and/or" as used herein refers to and includes any or all possible combinations of one or more of the associated listed items.

It should be understood that, although the terms first, second, third, etc. may be used in embodiments of the present disclosure to describe various information, such information should not be limited to these terms. These terms are only used to distinguish the same type of information from each other. For example, without departing from the scope of embodiments of the present disclosure, first information may also be referred to as second information, and similarly, the second information may also be referred to as the first information. Depending on the context, the word "if" as used herein can be interpreted as "upon" or "when" or "in response to determination".

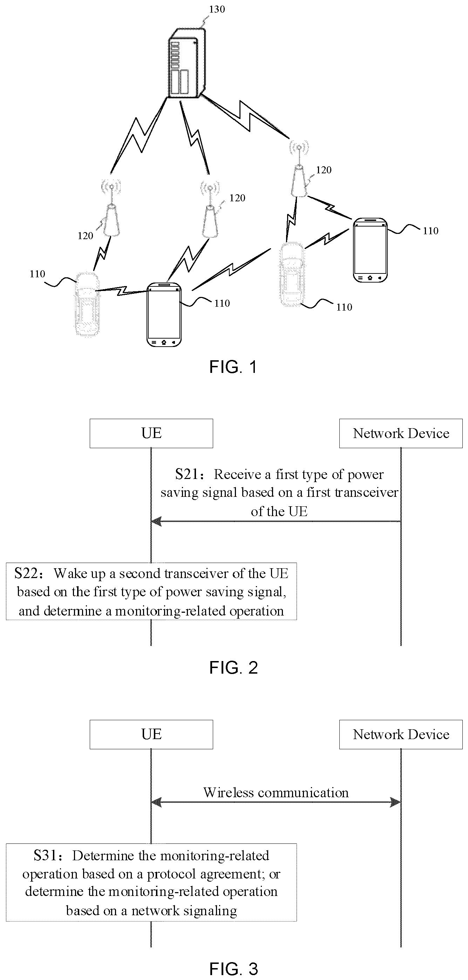

Reference is made to FIG. 1, which shows a schematic structural diagram of a wireless communication system provided by an embodiment of the present disclosure. As illustrated in FIG. 1, the wireless communication system is a communication system based on cellar mobile communication technologies. The wireless communication system may include several User Equipments (UEs) 110 and several base stations 120.

The UE 110 may refer to a device that provides voice and/or data connectivity to a user. The UE 110 may communicate with one or more core networks via a Radio Access Network (RAN). The UE 110 may be an Internet of Things UE, such as a sensor device, a mobile phone (or called "cellular" phone) and a computer with the Internet of Things UE, for example, may be a fixed, portable, pocket-sized, handheld, built-in computer or vehicle-mounted device. For example, the UE may be a station (STA), a subscriber unit, a subscriber station, a mobile station, a mobile, a remote station, an access point, a remote terminal, an access terminal, a user terminal, a user agent, a user device, or user equipment. Or, the UE 110 may also be a device of an unmanned aerial vehicle. Or, the UE 110 may also be a vehicle-mounted device, such as a trip computer with a wireless communication function, or a wireless user device connected to an external trip computer. Or, the UE 110 may also be a roadside device, such as a streetlight, a signal light or another roadside device with a wireless communication function.

The base station 120 can be a network-side device in a wireless communication system. The wireless communication system can be a 4th generation mobile communication (4G) system, also known as a Long Term Evolution (LTE) system. Or, the wireless communication system may also be a 5G system, also known as a New Radio (NR) system or a 5G NR system. Or, the wireless communication system may also be a next-generation system of 5G system. An access network in the 5G system can be referred to as a New Generation-Radio Access Network (NG-RAN).

The base station 120 can be an evolved NodeB (eNB) in the 4G system. Or, the base station 120 may also be a gNB with a central distributed architecture in the 5G system. When the base station 120 adopts the central distributed architecture, it usually includes a Central Unit (CU) and at least two Distributed Units (DUs). The CU is provided with a protocol stack of a Packet Data Convergence Protocol (PDCP) layer, a Radio Link Control (RLC) layer, and a Media Access Control (MAC) layer. The DU is provided with a protocol stack of a Physical (PHY) layer. A specific implementation of the base station 120 is not limited in embodiments of the present disclosure.

A wireless connection can be established between the base station 120 and the UE 110 through a radio air interface. In different implementations, the radio air interface is a radio air interface based on a 4th generation mobile communication network technology (4G) standard. Or, the radio air interface is a radio air interface based on a 5th generation mobile communication network technology (5G) standard, such as the NR. Or, the radio air interface may also be a radio air interface based on a 5G next-generation mobile communication network technology standard.

In some embodiments, an End to End (E2E) connection may also be established between UEs 110, such as a vehicle to vehicle (V2V) communication, a vehicle to infrastructure (V2I) communication and a vehicle to pedestrian (V2P) communication in a vehicle to everything (V2X) communication, and other scenarios.

Here, the above UE may also be considered to be a terminal device in the following embodiments.

In some embodiments, the above wireless communication system may further include a network management device 130.

The several base stations 120 are connected to the network management device 130, respectively. The network management device 130 can be a core network device in the wireless communication system. For example, the network management device 130 can be a Mobility Management Entity (MME) in an Evolved Packet Core (EPC) network. Or, the network management device may also be another core network device, such as a Serving Gateway (SGW), a Public Data Network Gateway (PGW), a Policy and Charging Rules Function (PCRF) unit or a Home Subscriber Server (HSS). An implementation form of the network management device 130 is not limited in embodiments of the present disclosure.

In order to facilitate the understanding of those skilled in the art, embodiments of the present disclosure enumerate multiple implementations to clearly illustrate the technical solutions of the embodiments of the present disclosure. Note that, those skilled in the art can understand that the multiple embodiments provided by the embodiments of the present disclosure can be executed separately, or can be executed together with the methods of other embodiments of the embodiments of the present disclosure, or can be executed together with some methods in other related arts separately or in combination; the embodiments of the present disclosure do not limit this.

In order to better understand the technical solution described in any embodiment of the present disclosure, the related art is partially explained first.

In an embodiment, in the R17 power saving project, a power saving signal is introduced for an idle UE, and the power saving signal may be Paging Early Indication (PEI). Here, the PEI may be configured before a Paging Occasion (PO). For example, if the UE detects the power saving signal, it needs to monitor Paging Downlink Control Information (Paging DCI), and if the UE does not detect the power saving signal, it skips monitoring of the paging DCI.

In an embodiment, in R17, in order to facilitate the UE to receive the PEI, an offset parameter may be configured for the UE.

In an embodiment, in R16 or R17, regardless of the power saving signal, a UE modem is required to detect the power saving signal. However, in R18, it is desired to introduce a separate transceiver, i.e., a low power wake-up receiver, to receive the power saving signal, and the UE modem or the UE main radio can only be woken up after the separate transceiver is woken up, otherwise the modem or the main radio will remain in a sleep state.

In an embodiment, R17 defines the following two paging grouping modes:

a paging grouping mode based on a user equipment identifier (UE-ID), which is that the UE, a base station and a core network device reach consistency in UE grouping confirmation according to the UE ID. For example, a group is obtained according to the paging grouping based on UE-ID, and the formula can be:

$$ wg=floor\left( floor\left( \frac{UE\_ID}{N \times N_s} \right) / N_n \right) mod\, N_W $$

; where wg is a selected paging grouping resource; $N_W$ is the total number of paging grouping resources of the UE_ID paging grouping. UE_ID is a paging group to which the UE belongs, N is a paging frame density in a time domain; and $N_s$ is a paging density in the paging frame in the time domain (for example, a value may be 1, 2 or 4, etc.); $N_n$ is a paging narrowband ($N_n$ is 1 for the existing NR system, so it can be omitted). Here, the paging grouping mode based on UE-ID is also called a random mode or a modulo mode of UE-ID; and

a paging grouping mode based on CN-assigned subgrouping, where the paging grouping mode based on CN-assigned subgrouping is performed by the core network device as a unified node. Here, unlike a probability allocation mode in LET, the paging group identifier (ID) is directly allocated in NR. For example, the network device may allocate the paging group ID based on an attribute of the UE and/or the statistical paging probability, etc.

In an embodiment, the UE may determine the paging group ID of the UE based on a capability supported by the UE and/or a capability supported by the network device. The group may be a paging group ID determined based on the paging grouping mode based on CN-assigned subgrouping, or may be a paging group ID determined based on the paging grouping mode based on UE-ID. The UE will monitor the corresponding PEI. For example, the PEI is carried in the DCI, and the PEI carries wake-up indication information of the corresponding group; and if the wake-up indication information is 1, the group is woken up, and if the wake-up indication information is 0, the group is sleep.

In the related arts, after the introduction of the separate transceiver, there is no solution for an operating state of the UE.

As shown in FIG. 2, embodiments of the present disclosure provide a monitoring method, which is performed by a UE and includes:

in step S21, a first type of power saving signal is received based on a first transceiver of the UE; and
in step S22, a second transceiver of the UE is woken up based on the first type of power saving signal, and a monitoring-related operation is determined.

In an embodiment, the UE may be various mobile terminals or fixed terminals. For example, the UE may be, but is not limited to, a mobile phone, a computer, a server, a wearable device, a game control platform, or a multimedia device.

The UE involved in embodiments of the present disclosure may be one or more UEs in a paging group, and/or, the UE may be a single UE.

The step S21 may be that: the UE in a Radio Resource Control (RRC) non-connected state uses the first transceiver to receive the first type of power saving signal. Here, the RRC non-connected state includes an RRC idle state and/or an RRC inactive state. Here, the RRC non-connected state may also be a newly defined RRC non-connected state. For example, the newly defined RRC non-connected state is an RRC ultra-non-connected state, and the RRC ultra-non-connected state includes: an RRC ultra-idle state (RRC ultra-IDLE) and/or an RRC ultra-inactive state (RRC ultra-INACTIVE).

The connected UE involved in embodiments of the present disclosure is an RRC connected UE, and the non-connected UE involved in embodiments of the present disclosure is an RRC non-connected UE.

The step S21 may be that: the first type of power saving signal sent by a network device is received based on the first transceiver of the UE. Here, the network device may be an access network device or a core network device, the access network device may be but is not limited to a base station, and the core network device may be but is not limited to various network functions or entities that implement the network functions. Here, the base station may be but is not limited to at least one of: a 3G base station, a 4G base station, a 5G base station and other evolved base stations. If the wake-up signal is sent by the core network device, the core network device sends the wake-up signal to the base station, and the base station forwards the wake-up signal to the UE.

Here, the first type of power saving signal may be configured to wake up the second transceiver of the UE.

Here, the power consumption of the first transceiver is less than the power consumption of the second transceiver. The power consumption of the first transceiver being less than the power consumption of the second transceiver may be that: the power consumed by the first transceiver to receive and/or send information is less than the power consumed by the second transceiver to receive and/or send information. For example, the first transceiver consumes less power to decode each signal than the second transceiver to decode the same signal.

In an embodiment, the UE includes the first transceiver and the second transceiver, and the power consumption of the first transceiver is less than the power consumption of the second transceiver. Here, a structure of the first transceiver is very simple relative to a structure of the second transceiver, the second transceiver may be the main radio of the UE, and the first transceiver is a separate transceiver, i.e., a ultra-low power wake-up receiver, introduced for the UE.

In an embodiment, the first transceiver is equipped with receiving and transmitting functions, and the second transceiver is equipped with receiving and transmitting functions.

In an embodiment, the first transceiver may also be a first receiver; and/or the second transceiver may be a second receiver. Here, the first receiver is equipped with a receiving function, and/or the second receiver is equipped with a receiving function.

In another embodiment, the first transceiver is an auxiliary transceiver, and the second transceiver is a primary transceiver. Here, the auxiliary transceiver is configured to assist the primary transceiver in receiving and/or sending the information.

In an embodiment, the first type of power saving signal is a signal with lower power consumption than the second type of power saving signal. Here, the first type of power saving signal being the signal with lower power consumption than the second type of power saving signal may be that the power consumed by the UE to receive the first type of power saving signal is lower than the power consumed by the UE to receive the second type of power saving signal.

In another embodiment, the second type of power saving signal includes but is not limited to at least one of: PEI or DCP. Here, the first type of power saving signal is a power saving signal other than the second type of power saving signal. The first type of power saving signal may be a predefined new power saving signal, or may be a power saving signal with lower power consumption than the PEI and/or the DCP.

For example, the second type of power saving signal may be the PEI used when the UE is in the RRC non-connected state, and/or the DCP used when the UE is in the connected state.

Thus, in embodiments of the present disclosure, the UE can receive the first type of power saving signal based on the first transceiver of the UE, wake up the second transceiver of the UE based on the first type of power saving signal, and then determine the monitoring-related operation. In this way, in the embodiments of the present disclosure, the second transceiver with the relatively high power consumption is woken up only after the first transceiver with the relatively low power consumption monitors the first type of power saving signal, and there is no need for the second transceiver with the relatively high power consumption to be woken up from the beginning to perform the monitoring operation, thereby reducing the power consumption of the UE and saving the power of the UE. Moreover, in the embodiments of the present disclosure, the monitoring-related operation can be determined after the second transceiver of the UE is woken up by the first type of power saving signal, thereby realizing the determination of the monitoring operation of the UE after the UE introduces the first transceiver.

It should be noted that those skilled in the art can understand that the method provided in embodiments of the present disclosure can be executed alone or together with some methods in the embodiments of the present disclosure or some methods in the related arts.

In some embodiments, determining the monitoring-related operation in the step S22 includes but is not limited to at least one of:

determining to enable monitoring of scheduling information; or
determining whether to skip monitoring of a second type of power saving signal.

Embodiments of the present disclosure provide a monitoring method, which is performed by a UE, and includes: determining to enable monitoring of scheduling information; and/or determining whether to skip monitoring of a second type of power saving signal.

In an embodiment, the scheduling information includes but is not limited to at least one of: a paging message or DCI.

For example, the paging message included in the scheduling information may be a paging message of a PO.

For example, after the RRC non-connected UE receives the first type of power saving signal based on the first transceiver of the UE, it may wake up the second transceiver based on the first type of power saving signal, and may monitor the paging message of the PO.

For example, after the RRC connected UE receives the first type of power saving signal based on the first transceiver of the UE, it may wake up the second transceiver based on the first type of power saving signal, and may monitor DCI of subsequent data scheduling.

In an embodiment, determining whether to skip the monitoring of the second type of power saving signal includes one of:

determining to skip the monitoring of the second type of power saving signal; or

continuing the monitoring of the second type of power saving signal.

Here, skipping the monitoring of the second type of power saving signal may include: skipping the monitoring of the second type of power saving signal and enabling monitoring of the scheduling information.

For example, after the UE receives the first type of power saving signal based on the first transceiver of the UE, it may wake up the second transceiver based on the first type of power saving signal; and the UE skips the monitoring of the second type of power saving signal based on the second transceiver, and monitors the scheduling information. For example, the UE in the non-connected state may not need to monitor the subsequent PEI, but directly enable the monitoring of the paging message of the PO. For another example, the UE in the connected state may not need to monitor the subsequent DCP but directly monitor the DCI of the subsequent data scheduling.

For example, after the UE receives the first type of power saving signal based on the first transceiver of the UE, it may wake up the second transceiver based on the first type of power saving signal; and the UE continues the monitoring of the second type of power saving signal based on the second transceiver.

Thus, in embodiments of the present disclosure, after the second transceiver is woken up, the UE can determine the monitoring-related operation. For example, it can be determined whether to enable the monitoring of the scheduling information, so that the scheduling information can be directly monitored without monitoring the second type of power saving signal, thereby further saving the power consumption and the power of the UE. For another example, the monitoring of the second type of power saving signal can be continued, so that it can be known in advance whether there will be subsequent paging messages or DCI, etc., thereby improving the success rate of monitoring the paging, etc.

It should be noted that those skilled in the art can understand that the method provided in embodiments of the present disclosure can be executed alone or together with some methods in the embodiments of the present disclosure or some methods in the related arts.

In some embodiments, determining the monitoring-related operation in the step S22 includes one of:

determining the monitoring-related operation based on a protocol agreement; or
determining the monitoring-related operation based on a network signaling.

As shown in FIG. 3, embodiments of the present disclosure provide a monitoring method, which is performed by a UE and includes:

in step S31, a monitoring-related operation is determined based on a protocol agreement; or the monitoring-related operation is determined based on a network signaling.

In some embodiments of the present disclosure, determining the monitoring-related operation may be, but is not limited to: determining to enable monitoring of scheduling information; and/or determining whether to skip monitoring of a second type of power saving signal. Here, the scheduling information may be the scheduling information in the above embodiments, and the second type of power saving signal may be the second type of power saving signal in the above embodiments.

In some embodiments, determining the monitoring-related operation based on the protocol agreement includes one of:

in response to the UE being a non-connected UE supporting the monitoring of the second type of power saving signal, skipping monitoring of PEI and enabling monitoring of a paging message of a PO; or
in response to the UE being a connected UE supporting the monitoring of the second type of power saving signal, skipping monitoring of DCP and enabling monitoring of DCI.

In an embodiment, the protocol may be a wireless communication protocol; for example, it may be a 5G communication protocol.

In another embodiment, the protocol may be any protocol negotiated between the UE and the network device.

Here, it is stipulated in the protocol agreement that after the UE receives the first type of power saving signal, it enables the monitoring of the scheduling information.

Embodiments of the present disclosure provide a monitoring method, which is performed by a UE and includes: in response to the UE being a non-connected UE supporting monitoring of a second type of power saving signal, skipping monitoring of PEI and enabling monitoring of a paging message of a PO.

For example, when the non-connected UE receives the first type of power saving signal, it wakes up the second transceiver based on the first type of power saving signal; and the non-connected UE does not need to continue the monitoring of the PEI, but directly enables the monitoring of the paging message of the PO.

Embodiments of the present disclosure provide a monitoring method, which is performed by a UE and includes: in response to the UE being a connected UE supporting monitoring of a second type of power saving signal, skipping monitoring of DCP and enabling monitoring of DCI.

For example, when the connected UE receives the first type of power saving signal, it wakes up the second transceiver based on the first type of power saving signal; and the connected UE does not need to monitor the subsequent DCP, but directly enables the monitoring of the DCI of the subsequent data scheduling.

Thus, in embodiments of the present disclosure, based on the protocol agreement, the UE can directly enable the monitoring of the scheduling information (such as the DCI or the paging message, etc.) without monitoring the second type of power saving signal, thereby further reducing the power consumption and the power of the UE.

It should be noted that those skilled in the art can understand that the method provided in embodiments of the present disclosure can be executed alone or together with some methods in the embodiments of the present disclosure or some methods in the related arts.

In some embodiments, the method includes: receiving the network signaling; and

determining the monitoring-related operation based on the network signaling in the step S31 includes: determining, based on first indication information carried in the network signaling, whether to skip the monitoring of the second type of power saving signal.

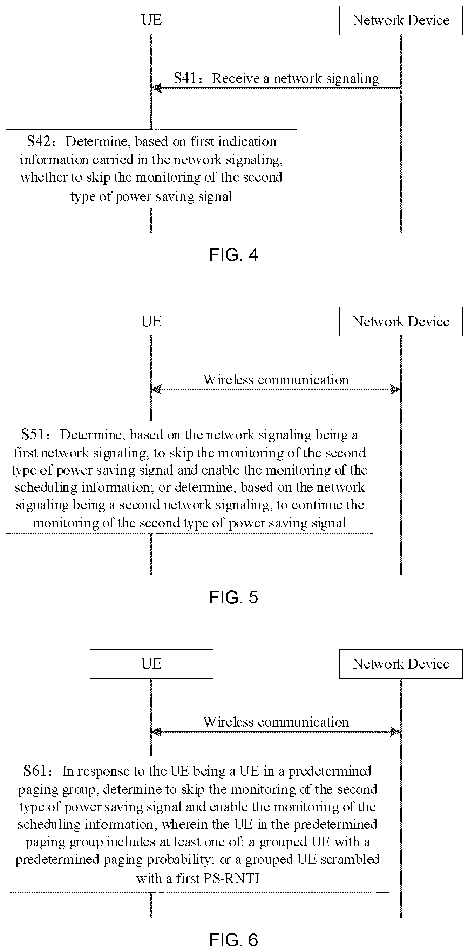

As shown in FIG. 4, embodiments of the present disclosure provide a monitoring method, which is performed by a UE and includes:

in step S41: a network signaling is received; and
in step S42, it is determined, based on first indication information carried in the network signaling, whether to skip monitoring of a second type of power saving signal.

In some embodiments of the present disclosure, the second type of power saving signal is the second type of power saving signal in the above embodiments. For example, the second type of power saving signal includes but is not limited to the PEI or the DCP.

In an embodiment, when the first indication information is a first value, it is determined to continue monitoring of the second type of power saving signal, and when the first indication information is a second value, it is determined to skip the monitoring of the second type of power saving signal. For example, the first value may be "1", and the second value may be "0".

The step S41 may be that: the network signaling sent by the network device is received.

In some embodiments, the network signaling includes: a broadcast signaling and/or a dedicated signaling.

Here, the network device sends the first indication information through the broadcast signaling, so that at least one UE (one or one or more groups of UEs) can receive the first indication information to determine whether to skip the monitoring of the second type of power saving signal. In this way, the unified notification can be achieved for the at least one UE, thereby reducing the signaling interaction.

Here, the network device sends the first indication information through the dedicated signaling, and can inform the specific UE whether to monitor the second type of power saving signal accordingly.

In some other embodiments, the network signaling includes but is not limited to at least one of:

a RRC signaling, and the RRC signaling includes: an RRC release message or an RRC reconfiguration message;
a Medium Access Control (MAC) signaling, and the MAC signaling includes a MAC control element (MAC CE); or
a DCI signaling;
Based on a physical layer signaling in a sequence form, for example, an agreed sequence is used to indicate the sending of the first indication information.

For example, when the UE is released, the UE may receive the RRC release message sent by the network device, and the RRC release message carries the first indication information; and the UE determines whether to skip the monitoring of the second type of power saving signal based on the first indication information. For example, when the UE determines that the first indication information in the RRC release message is the first value, the UE continues the monitoring of the second type of power saving signal; or, when the UE determines that the first indication information in the RRC release message is the second value, the UE skips the monitoring of the second type of power saving signal.

Thus, in embodiments of the present disclosure, the UE may be informed whether to skip the monitoring of the second type of power saving signal through the network signaling sent by the network device.

In an embodiment, the network signaling carries the first indication information. Here, the first type of power saving signal and the network signaling carrying the first indication information are sent separately. For example, the network device first sends the first type of power saving signal and then sends the first type of power saving signal carrying the first indication information.

In another embodiment, the network signaling carries the first type of power saving signal and the first indication information, and the first type of power saving signal and the first indication information are respectively carried in different information indication fields of the network signaling. Here, the first type of power saving signal and the first indication information are sent together. For example, the network device sends the network signaling, and the network signaling carries the first type of power saving signal and the first indication information. In this way, the network signaling can be sent by the network device, and it is achieved that the second transceiver of the UE is woken up based on the first type of power saving signal and it is determined whether to skip monitoring of the second type of power saving signal based on the first indication information. In this way, the signaling interaction can be reduced, and the power consumption and the power of the UE can be reduced.

Thus, in embodiments of the present disclosure, the first indication information may be carried by different network signaling to accurately indicate whether to skip the monitoring of the second type of power saving signal.

In some embodiments, determining the monitoring-related operation in the step S22 includes:

determining, based on second indication information carried in the first type of power saving signal, whether to skip the monitoring of the second type of power saving signal.

Embodiments of the present disclosure provide a monitoring method, which is performed by a UE and includes:

determining, based on second indication information carried in the first type of power saving signal, whether to skip the monitoring of the second type of power saving signal.

Here, the step S22 may be that: after the second transceiver of the UE is woken up based on the first type of power saving signal, the monitoring-related operation is determined based on the first type of power saving signal. Here, determining the monitoring-related operation based on the first type of power saving signal may be: determining the monitoring-related operation based on the second indication information carried in the first type of power saving signal. Here, determining the monitoring-related operation may be: determining whether to skip the monitoring of the second type of power saving signal and/or enable the monitoring of the scheduling information.

In an embodiment, when the second indication information is a third value, it is determined to continue the monitoring of the second type of power saving signal, and when the second indication information is a fourth value, it is determined to skip the monitoring of the second type of power saving signal. For example, the third value may be "1", and the fourth value may be "0".

For example, the UE receives the first type of power saving signal based on the first transceiver of the UE, and wakes up the second transceiver of the UE based on the first type of power saving signal; and determines, based on the second indication information carried in the first type of power saving signal, whether to skip the monitoring of the second type of power saving signal. For example, if the UE determines that the second indication information is the third value, it determines to continue the monitoring of the second type of power saving signal. For another example, if the UE determines that the second indication information is the fourth value, it skips the monitoring of the second type of power saving signal.

In embodiments of the present disclosure, the second indication information indicating whether to skip the monitoring of the second type of power saving signal may be carried in the first type of power saving signal and sent. In this way, the second transceiver can be woken up based on the first type of power saving signal, and it can be determined whether to skip the monitoring of the second type of power saving signal based on the first type of power saving signal. In this way, no additional network signaling is required to send the first indication information indicating whether to skip the monitoring of the second type of power saving signal, thereby reducing the signaling interaction, and reducing the power consumption and the power of the communication device (the UE or the network device), etc.

It should be noted that those skilled in the art can understand that the method provided in embodiments of the present disclosure can be executed alone or together with some methods in the embodiments of the present disclosure or some methods in the related arts.

In some embodiments, determining the monitoring-related operation based on the network signaling in the step S31 includes at least one of:

determining, based on the network signaling being a first network signaling, to skip the monitoring of the second type of power saving signal and enable the monitoring of the scheduling information; or
determining, based on the network signaling being a second network signaling, to continue the monitoring of the second type of power saving signal.

As shown in FIG. 5, embodiments of the present disclosure provide a monitoring method, which is performed by a UE and includes:

in step S51, based on a network signaling being a first network signaling, it is determined to skip monitoring of a second type of power saving signal and enable monitoring of scheduling information; or based on the network signaling being a second network signaling, it is determined to continue the monitoring of the second type of power saving signal.

In some embodiments of the present disclosure, the second type of power saving signal may be the second type of power saving signal in the above embodiments; and the monitoring-related operation may be the monitoring-related operation in the above embodiments.

In some embodiments of the present disclosure, the first network signaling and the second network signaling may be the network signaling in the above embodiments. For example, the first network signaling and the second network signaling may be the broadcast signaling or the dedicated signaling. For example, the first network signaling and the second network signaling may be but are not limited to the RRC signaling, the DCI signaling or the MAC signaling.

In an embodiment, the first network signaling is different from the second network signaling. For example, the first network signaling is the RRC signaling, and the second network signaling is the MAC signaling. For another example, the first network signaling is the RRC release message, and the second network signaling is the RRC reconfiguration message.

In another embodiment, the first network signaling is the same as the second network signaling. For example, the first network signaling and the second network signaling are both the RRC signaling; but the first indication information carried by the first network signaling has a different value from the first indication information carried by the second network signaling.

Thus, in embodiments of the present disclosure, different network signaling may be used to inform whether to skip the monitoring of the second type of power saving signal or to continue the monitoring of the second type of power saving signal.

In an embodiment, the first network signaling is configured to indicate that the network device determines that data is to arrive after the second transceiver is woken up, and the second network signaling is configured to indicate that the network device cannot determine that the data is to arrive after the second transceiver is woken up.

For example, the UE receives the first network signaling, and the first network signaling is sent after the network device determines that the data is to arrive after the second transceiver of the UE is woken up; and the UE determines, based on the first network signaling, to skip the monitoring of the second type of power saving signal and enable the monitoring of the scheduling information. In this way, in embodiments of the present disclosure, when the network device determines that the data is to arrive after the second transceiver of the UE is woken up by the first type of power saving signal, it may send the first network signaling to the UE to inform the UE that it does not need to monitor the second type of power saving signal but directly monitor the scheduling information, thereby further saving the power consumption of the UE and improving the monitoring efficiency.

For example, the UE receives the second network signaling, and the second network signaling is sent when the network device is unable to determine that the data is to arrive after the second transceiver of the UE is woken up; and the UE determines to continue the monitoring of the second type of power saving signal based on the second network signaling. In this way, in embodiments of the present disclosure, when the network device is unable to determine that the data is to arrive after the second transceiver of the UE is woken up by the first type of power saving signal, it may send the second network signaling to the UE to inform the UE that it needs to continue the monitoring of the second type of power saving signal. Here, since the network device cannot determine whether the data (such as the scheduling information) is to arrive, the second type of power saving signal can be monitored to determine whether there is the subsequent scheduling information, etc., thereby reducing the loss of the scheduling information and improving the paging success rate, etc.

In some embodiments, determining the monitoring-related operation in the step S22 includes at least one of:

in response to the UE being a UE in a predetermined paging group, determining to skip the monitoring of the second type of power saving signal and enable monitoring of the scheduling information, and the UE in the predetermined paging group includes at least one of: a grouped UE with a predetermined paging probability; or a grouped UE scrambled with a first Power Saving-Radio Network Temporary Identity (PS-RNTI).

As shown in FIG. 6, embodiments of the present disclosure provide a monitoring method, which is performed by a UE and includes:

in step S61, in response to the UE being a UE in a predetermined paging group, it is determined to skip the monitoring of the second type of power saving signal and enable monitoring of the scheduling information, and the UE in the predetermined paging group includes at least one of: a grouped UE with a predetermined paging probability; or a grouped UE scrambled with a first PS-RNTI.

Here, for the UE in the predetermined paging group, it is determined to skip the monitoring of the second type of power saving signal and enable the monitoring of the scheduling information, which can be predetermined by the protocol or indicated by the network signaling.

For example, the protocol stipulates that for the UE in the predetermined paging group, the monitoring of the second type of power saving signal is skipped and the monitoring of the scheduling information is enabled. If the UE determines that the UE belongs to the UE in the predetermined paging group, the UE determines to skip the monitoring of the second type of power saving signal and enable the monitoring of the scheduling information.

For example, the UE receives the network signaling sent by the network device, and the network signaling indicates that for the UE in the predetermined paging group, the monitoring of the second type of power saving signal is skipped and the monitoring of the scheduling information is enabled. If the UE determines that the UE belongs to the UE in the predetermined paging group, then it is determined, based on the network signaling, to skip the monitoring of the second type of power saving signal and enables the monitoring of the scheduling information.

Embodiments of the present disclosure provide a monitoring method, which is performed by a UE and includes: in response to the UE belonging to a grouped UE with a predetermined paging probability, determining to skip monitoring of a second type of power saving signal and enable monitoring of scheduling information.

In an embodiment, the grouped UE with the predetermined paging probability may be a grouped UE with any paging probability.

In another embodiment, the grouped UE with the predetermined paging probability may be a grouped UE with a paging probability greater than a threshold probability.

For example, all UEs in a cell are divided according to the paging probability; for example, these UEs are divided into N groups with different paging probabilities, where N is an integer greater than 1; and the paging probabilities of the 1st to the Nth groups decrease in sequence. For example, the grouped UE with the predetermined paging probability may be a grouped UE in at least one group among the 1st to the Nth groups. For another example, the grouped UE with the predetermined paging probability may be a grouped UE with the highest paging probability, such as a grouped UE in the 1st group. For yet another example, the grouped UE with the predetermined paging probability may be a grouped UE with a relatively high paging probability, such as a grouped UE in the 1st group, a grouped UE in the 2nd group, and/or a grouped UE in the 3rd group.

Thus, in embodiments of the present disclosure, the UE in the group with the predetermined paging probability can be notified, based on the protocol agreement or the network signaling, that it does not need to monitor the second type of power saving signal and can directly monitor the scheduling information. For example, when the grouped UE with the predetermined paging probability is the grouped UE with the relatively high paging probability, since the paging probability is relatively high, it is very likely that there is the scheduling information to arrive. Accordingly, the scheduling information can be directly monitored.

Embodiments of the present disclosure provide a monitoring method, which is performed by a UE and includes: in response to the UE belonging to a grouped UE scrambled by a first PS-RNTI, determining to skip monitoring of a second type of power saving signal and enable monitoring of scheduling information.

In an embodiment, the grouped UE scrambled by the first PS-RNTI is a grouped UE whose probability of being scheduled is greater than a predetermined probability.

For example, at least some UEs in the cell can be divided into: grouped UEs scrambled based on the first PS-RNTI (PS-RNTI1), and grouped UEs scrambled based on a second PS-RNTI (PS-RNTI2). Then the network device can send the network signaling to notify that for the grouped UE scrambled by PS-RNTI1, the monitoring of the second type of power saving signal is skipped, and the monitoring of the scheduling information is enabled. When the UE belongs to the grouped UE scrambled by PS-RNTI1, the monitoring of the second type of power saving signal is skipped and the monitoring of the scheduling information is started.

In the above examples, the probability that the grouped UE scrambled by PS-RNTI1 is scheduled is greater than the probability that the grouped UE scrambled by PS-RNTI2 is scheduled.

Thus, in embodiments of the present disclosure, the grouped UE scrambled by the first PS-RNTI can be notified, based on the protocol agreement or the network signaling, that it does not need to monitor the second type of power saving signal, and directly monitor the scheduling information. For example, when the grouped UE scrambled by the first PS-RNTI is a grouped UE with a relatively high probability of being scheduled, since the probability of being scheduled is relatively high, it is very likely that there is the scheduling information to arrive. Accordingly, the scheduling information can be directly monitored.

It should be noted that those skilled in the art can understand that the method provided in embodiments of the present disclosure can be executed alone or together with some methods in the embodiments of the present disclosure or some methods in the related arts.

The following monitoring method is performed by a network device, which is similar to the description of the monitoring method performed by the UE above. For technical details not disclosed in the embodiments of the monitoring method performed by the base station, reference may be made to the description of the example of the monitoring method performed by the UE, and no detailed description is given here.

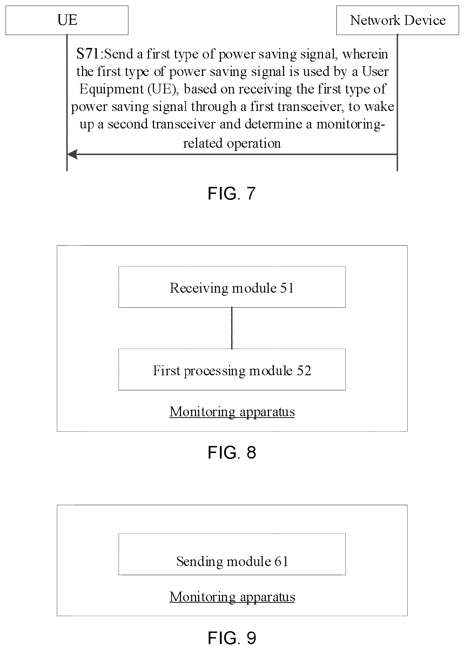

As shown in FIG. 7, a monitoring method is performed by a network device, and includes:

in step S71, a first type of power saving signal is sent, and the first type of power saving signal is used by a User Equipment (UE), based on receiving the first type of power saving signal through a first transceiver, to wake up a second transceiver and determine a monitoring-related operation.

In some embodiments of the present disclosure, the first type of power saving signal and the second type of power saving signal may be the first type of power saving signal and the second type of power saving signal in the above-mentioned embodiments, respectively. The first transceiver and the second transceiver may be the first transceiver and the second transceiver in the above-mentioned embodiments, respectively. The monitoring-related operation may be the monitoring-related operation in the above-mentioned embodiments.

For example, the second type of power saving signal may be but is not limited to at least one of PEI and DCP, and the first type of power saving signal may be a power saving signal other than the second type of power saving signal. Here, PEI may be PEI used by a UE in a non-connected state; and/or, DCP may be DCP used by a UE in a connected state.

For example, determining the monitoring-related operation may be, but is not limited to, at least one of: determining to enable monitoring of scheduling information; or determining whether to skip monitoring of a second type of power saving signal.

In some embodiments of the present disclosure, the scheduling information may be the scheduling information in the above embodiments. For example, the scheduling information includes at least one of: a paging message; or Downlink Control Information (DCI). For example, the paging message included in the scheduling information may be a paging message of a paging occasion.

In some embodiments, the first type of power saving signal is used by the UE, upon waking up the second transceiver based on the first type of power saving signal, to determine the monitoring-related operation based on a protocol agreement.

In an embodiment of the present disclosure, there is provided a monitoring method, which is performed by a network device and includes: sending a network signaling, and the network signaling is configured to determine the monitoring-related operation after the second transceiver is woken up by the first type of power saving signal.

In some embodiments of the present disclosure, the network signaling may be the network signaling in the above embodiments. The network signaling may be the broadcast signaling or the dedicated signaling. For example, the network signaling may be but is not limited to the RRC signaling, the DCI signaling or the MAC signaling.

In some embodiments, the first type of power saving signal is used by a non-connected UE supporting the monitoring of the second type of power saving signal, upon waking up the second transceiver, to determine to skip monitoring of the PEI and enable monitoring of a paging message of a PO; and/or,

the first type of power saving signal is used by a connected UE supporting the monitoring of the second type of power saving signal, upon waking up the second transceiver, to determine to skip monitoring of the DCP and enable monitoring of the paging message of the PO.

In some embodiments, first indication information is carried in the network signaling, and the first indication information is configured to indicate whether to skip the monitoring of the second type of power saving signal.

In some embodiments, sending the network signaling includes:

in response to determining that data is to arrive at the UE after the second transceiver is woken up, sending a first network signaling, and the first network signaling is used by the UE to skip the monitoring of the second type of power saving signal and enable monitoring of the scheduling information; or,
in response to being unable to determine that the data is to arrive at the UE after the second transceiver is woken up, sending a second network signaling, and the second network signaling is used by the UE to determine to continue monitoring the second type of power saving signal.

Embodiments of the present disclosure provide a monitoring method, which is performed by a network device and includes:

in response to determining that data is to arrive at the UE after the second transceiver is woken up, sending a first network signaling, and the first network signaling is used by the UE to skip the monitoring of the second type of power saving signal and enable monitoring of the scheduling information; or,
in response to being unable to determine that the data is to arrive at the UE after the second transceiver is woken up, sending a second network signaling, and the second network signaling is used by the UE to determine to continue the monitoring of the second type of power saving signal.

In some embodiments, second indication information is carried in the first type of power saving signal, and the second indication information is configured to indicate whether to skip the monitoring of the second type of power saving signal.

In some embodiments, determining the monitoring-related operation in the step S71 includes at least one of:

for a UE in a predetermined paging group, determining to skip the monitoring of the second type of power saving signal and enable monitoring of the scheduling information, and the UE in the predetermined paging group includes at least one of: a grouped UE with a predetermined paging probability; or a grouped UE scrambled with a first Power Saving-Radio Network Temporary Identity (PS-RNTI).

For the specific description of the network device side, reference may be made to the description of the UE side, which will not be repeated here.

It should be noted that those skilled in the art can understand that the method provided in embodiments of the present disclosure can be executed alone or together with some methods in the embodiments of the present disclosure or some methods in the related arts.

In order to further explain any embodiment of the present disclosure, a specific embodiment is provided below.

Embodiments of the present disclosure provide a monitoring method, including the following steps.

In step S81, a network device determines a first type of power saving signal, and the first type of power saving signal is different from a second type of power saving signal.

Here, the second type of power saving signal may be, but is not limited to, at least one of:

PEI used in a non-connected state; or
DCP used in a connected state.

In step S82, a UE receives the first type of power saving signal based on a first transceiver of the UE.

Step S83 includes one of steps S83A and S83B; and

in the step S83A, the UE wakes up a second transceiver based on the first type of power saving signal and determines to enable monitoring of scheduling information.

In an embodiment, in response to the UE being a non-connected UE supporting the second type of power saving signal, it is determined to skip monitoring of the PEI and enable paging monitoring of the PO.

In another embodiment, in response to the UE being a connected UE supporting monitoring of the second type of power saving signal, monitoring of the DCP is skipped and monitoring of the DCI is enabled.

In the step S83B, the UE wakes up the second transceiver based on the first type of power saving signal, and determines whether to skip monitoring of the second type of power saving signal, and the step S83B includes one of steps S83B1, S83B2 and S83B3.

Here, the determination of whether to skip the monitoring of the second type of power saving signal in the step S83B may be based on a protocol agreement or a network signaling indication.

In an embodiment, the network signaling may be a broadcast signaling or a dedicated signaling.

In another embodiment, the network signaling may be at least one of the RRC signaling, the MAC signaling, or the DCI signaling. The RRC signaling may be but is not limited to the RRC release message or the RRC reconfiguration message, and the MAC may be but is not limited to the MAC CE.

In the step S83B1, the UE determines whether to skip the monitoring of the second type of power saving signal based on the received network signaling.

In an embodiment, if the network device determines that data is to arrive after the second transceiver is woken up, it sends a first network signaling to the UE, and the first network signaling is configured to indicate that it is determined by the network device that the data is to arrive after the second transceiver is woken up; and the UE determines, based on the first network signaling, to skip the monitoring of the second type of power saving signal.

In another embodiment, if the network device cannot determine that the data is to arrive after the second transceiver is woken up, the network device sends a second network signaling to the UE, and the second network signaling is configured to indicate that it cannot be determined by the network device that the data is to arrive after the second transceiver is woken up; and the UE determines, based on the second network signaling, to continue the monitoring of the second type of power saving signal.

In yet another embodiment, the network device sends an RRC release message carrying first indication information, and the first indication information is configured to indicate whether to skip the monitoring of the second type of power saving signal; and the UE determines, based on the first indication information carried in the RRC release message, whether to skip the monitoring of the second type of power saving signal.

In step S83B2, the UE determines, based on the received first type of power saving signal, whether to skip the monitoring of the second type of power saving signal.

In an embodiment, the first type of power saving signal sent by the network device carries second indication information, and the second indication information is configured to indicate whether to skip the monitoring of the second type of power saving signal; and the UE determines, based on the second indication information carried in the first type of power saving signal, whether to skip the monitoring of the second type of power saving signal.

In the step S83B3, for a UE in a predetermined paging group, the UE determines, based on a protocol agreement or indication of a network signaling, to skip the monitoring of the second type of power saving signal and enable monitoring of the scheduling information.

In an embodiment, the protocol stipulates or the network signaling indicates that: the UE in the group with the predetermined paging probability skips the monitoring of the second type of power saving signal and enables the monitoring of the scheduling information. If the UE determines that the UE belongs to the grouped UE with the predetermined paging probability, it determines to skip the monitoring of the second type of power saving signal and enable the monitoring of the scheduling information.

In another embodiment, the protocol stipulates or the network signaling indicates that the UE in the group scrambled by the first PS-RNTI skips the monitoring of the second type of power saving signal and enables the monitoring of the scheduling information. If the UE determines that the UE belongs to the grouped UE scrambled by the first PS-RNTI, it determines to skip the monitoring of the second type of power saving signal and enables monitoring of the scheduling information.

It should be noted that those skilled in the art can understand that the method provided in embodiments of the present disclosure can be executed alone or together with some methods in the embodiments of the present disclosure or some methods in the related arts.

As shown in FIG. 8, embodiments of the present disclosure provide a monitoring apparatus, including:

 a receiving module 51, configured to receive a first type of power saving signal based on a first transceiver of a UE; and
 a first processing module 52, configured to wake up a second transceiver of the UE based on the first type of power saving signal, and determine a monitoring-related operation.

The monitoring apparatus provided by embodiments of the present disclosure can be applied to the UE.

In some embodiments, determining the monitoring-related operation includes at least one of:

 determining to enable monitoring of scheduling information; or
 determining whether to skip monitoring of a second type of power saving signal.

In some embodiments, the scheduling information includes at least one of: a paging message; or DCI.

In some embodiments, the second type of power saving signal includes at least one of: PEI; or DCP.

Embodiments of the present disclosure provide a monitoring apparatus, including: a first processing module 52, configured to determine the monitoring-related operation based on a protocol agreement.

Embodiments of the present disclosure provide a monitoring apparatus, including: a first processing module 52, configured to determine the monitoring-related operation based on a network signaling.

Embodiments of the present disclosure provide a monitoring apparatus, including: a first processing module 52, configured to, in response to the UE being a non-connected UE supporting the monitoring of the second type of power saving signal, skip monitoring of the PEI and enable monitoring of a paging message of a PO.

Embodiments of the present disclosure provide a monitoring apparatus, including: a first processing module 52, configured to, in response to the UE being a connected UE supporting the monitoring of the second type of power saving signal, skip monitoring of the DCP and enable monitoring of the DCI.

Embodiments of the present disclosure provide a monitoring apparatus, including:

a receiving module 51, configured to receive a network signaling; and
the first processing module 52 is configured to determine, based on first indication information carried in the network signaling, whether to skip the monitoring of the second type of power saving signal.

In some embodiments, the network signaling includes: a broadcast signaling and/or a dedicated signaling.

Embodiments of the present disclosure provide a monitoring apparatus, including: a first processing module 52, configured to determine, based on the network signaling being a first network signaling, to skip the monitoring of the second type of power saving signal and enable the monitoring of the scheduling information; and/or

the first processing module 52 is configured to determine, based on the network signaling being a second network signaling, to continue the monitoring of the second type of power saving signal.

Embodiments of the present disclosure provide a monitoring apparatus, including: a first processing module 52, configured to determine, based on second indication information carried in the first type of power saving signal, whether to skip the monitoring of the second type of power saving signal.

Embodiments of the present disclosure provide a monitoring apparatus, including: a first processing module 52, configured to, in response to the UE being a UE in a predetermined paging group, determine to skip the monitoring of the second type of power saving signal and enable the monitoring of the scheduling information, and the UE in the predetermined paging group includes at least one of: a grouped UE with a predetermined paging probability; or a grouped UE scrambled with a first Power Saving-Radio Network Temporary Identity (PS-RNTI).

As shown in FIG. 9, embodiments of the present disclosure provide a monitoring apparatus, including:
a sending module 61, configured to send a first type of power saving signal, and the first type of power saving signal is used by a User Equipment (UE), based on receiving the first type of power saving signal through a first transceiver, to wake up a second transceiver and determine a monitoring-related operation.

The monitoring apparatus provided by the embodiments of the present disclosure can be applied to a network device.

In some embodiments, determining the monitoring-related operation includes at least one of:

determining to enable monitoring of scheduling information; or
determining whether to skip monitoring of a second type of power saving signal.

In some embodiments, the scheduling information includes at least one of: a paging message; or DCI.

In some embodiments, the second type of power saving signal includes at least one of: PEI; or DCP.

In some embodiments, the first type of power saving signal is used by the UE, upon waking up the second transceiver based on the first type of power saving signal, to determine the monitoring-related operation based on a protocol agreement.

Embodiments of the present disclosure provide a monitoring apparatus, including: a sending module 61, configured to send a network signaling, and the network signaling is configured to determine the monitoring-related operation after the second transceiver is woken up by the first type of power saving signal.

In some embodiments, the first type of power saving signal is used by a non-connected UE supporting the monitoring of the second type of power saving signal, upon waking up the second transceiver, to determine to skip monitoring of the PEI and enable monitoring of a paging message of a PO; and/or,

the first type of power saving signal is used by a connected UE supporting the monitoring of the second type of power saving signal, upon waking up the second transceiver, to determine to skip monitoring of the DCP and enable the monitoring of the paging message of the PO.

In some embodiments, first indication information is carried in the network signaling, and the first indication information is configured to indicate whether to skip the monitoring of the second type of power saving signal.

In some embodiments, the network signaling includes: a broadcast signaling and/or a dedicated signaling.

Embodiments of the present disclosure provide a monitoring apparatus, including: a sending module 61, configured to, in response to determining that data is to arrive at the UE after the second transceiver is woken up, send a first network signaling, and the first network signaling is used by the UE to skip the monitoring of the second type of power saving signal and enable the monitoring of the scheduling information.

Embodiments of the present disclosure provide a monitoring apparatus, including: a sending module 61, configured to, in response to being unable to determine that the data is to arrive at the UE after the second transceiver is woken up, send a second network signaling, and the second network signaling is used by the UE to determine to continue the monitoring of the second type of power saving signal.

In some embodiments, second indication information is carried in the first type of power saving signal, and the second indication information is configured to indicate whether to skip the monitoring of the second type of power saving signal.

In some embodiments, determining the monitoring-related operation includes at least one of:

for a UE in a predetermined paging group, determining to skip the monitoring of the second type of power saving signal and enable the monitoring of the scheduling information, wherein the UE in the predetermined paging group includes at least one of: a grouped UE with a predetermined paging probability; or a grouped UE scrambled with a first Power Saving-Radio Network Temporary Identity (PS-RNTI).

Regarding the apparatus in the above embodiments, the specific manner in which each module performs operations has been described in detail in the embodiments of the method, and will not be elaborated here.

Embodiments of the present disclosure provide a communication device, including:

a processor; and
a memory configured to store executable instructions of the processor,
the processor is configured to implement the monitoring method in any embodiment of the present disclosure when running the executable instructions.

In an embodiment, the communication device may include but is not limited to at least one of the network device and the UE.

The processor may include various types of storage mediums, which are non-transitory computer storage mediums that can continue to remember information stored thereon after the UE loses power.

The processor can be connected to the memory via a bus, etc., and is configured to read the executable program stored in the memory, for example, at least one of the methods shown in FIGS. 2 to 7.

Embodiments of the present disclosure further provide a computer storage medium having a computer executable program stored thereon, which, when executed by a processor, implements the monitoring method in any embodiment of the present disclosure, for example, at least one of the methods shown in FIGS. 2 to 7.

Regarding the apparatus or storage medium in the above embodiments, the specific manner in which each module performs the operation has been described in detail in the method embodiments, and will not be elaborated here.

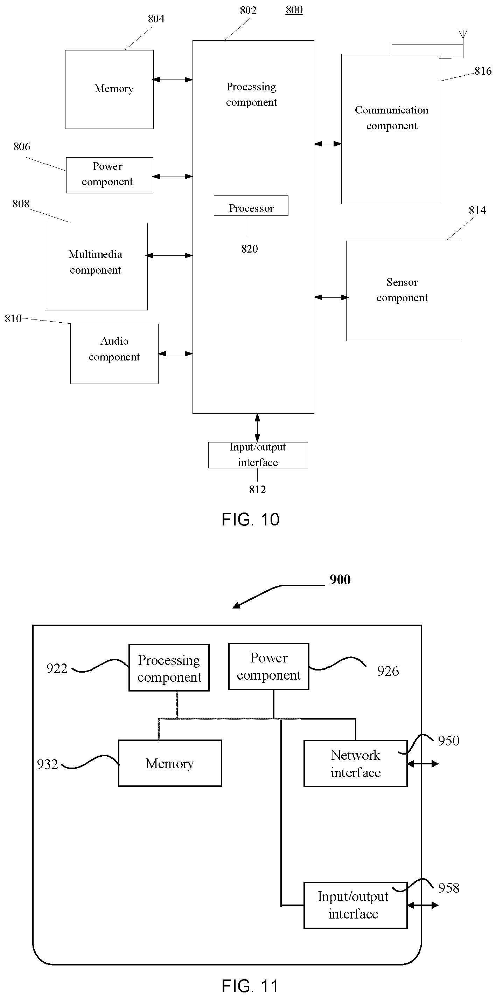

FIG. 10 shows a block diagram of a UE 800 according to an embodiment of the present disclosure. For example, the UE 800 may be a mobile phone, a computer, a digital broadcast terminal, a messaging device, a gaming console, a tablet device, a medical device, an exercise device, a personal digital assistant, etc.

Referring to FIG. 10, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, telephone calls, data communications, camera operations, and recording operations. The processing component 802 may include one or more processors 820 to execute instructions to complete all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the UE 800, contact data, phonebook data, messages, pictures, video, etc. The memory 804 may be implemented using any type of volatile or non-volatile memory apparatuses, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the UE 800. The power component 806 may include a power management system, one or more power sources, and any other components associated with the generation, management, and distribution of power in the UE 800.

The multimedia component 808 includes a screen providing an output interface between the UE 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a duration and a pressure associated with the touch or swipe action. In some embodiments, the multimedia component 808 includes a front camera and/or a rear camera. The front camera and the rear camera may receive an external multimedia datum while the UE 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide state assessments of various aspects of the UE 800. For instance, the sensor component 814 may detect an open/closed state of the UE 800, relative positioning of components, e.g., the display and the keypad, of the UE 800, a change in position of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the UE 800 and other devices. The UE 800 may access a wireless network based on a communication standard, such as WiFi, 4G or 5G, or a combination thereof. In an embodiment, the communication component 816 receives a broadcast signal or broadcast associated information from an external broadcast management system via a broadcast channel. In an embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an embodiment of the present disclosure, the UE 800 may be implemented with one or more application specific integrated circuits (ASICs), digital signal processors (DSPs), digital signal processing devices (DSPDs), programmable logic devices (PLDs), field programmable gate arrays (FPGAs), controller, micro-controller, microprocessors, or other electronic components, for performing the above described methods.

In an embodiment of the present disclosure, there is further provided a non-transitory computer readable storage medium including instructions, such as the memory 804 including instructions, the above instructions may be executed by the processor 820 in the UE 800 for completing the above-described methods. For example, the non-transitory computer-readable storage medium may be a ROM, a Random Access Memory (RAM), a CD-ROM, a magnetic tape, a floppy disc, an optical data storage device, and the like.

As shown in FIG. 11, embodiments of the present disclosure provide a structure of a base station. For example, a base station 900 may be provided as a network side device. Referring to FIG. 11, the base station 900 includes a processing component 922, which further includes one or more processors and a memory resource represented by a memory 932 for storing instructions executable by the processing component 922, such as an application program. The application program stored in the memory 932 may include one or more modules, each corresponding to a set of instructions. In addition, the processing component 922 is configured to execute the instructions to execute the aforementioned any method applied on the base station.

The base station 900 may further include: a power component 926 configured to perform power management of the base station 900, a wired or wireless network interface 950 configured to connect the base station 900 to the network, and an input/output (I/O) interface 958. The base station 900 may operate an operating system stored in the memory 932, such as Windows Server TM, Mac OS XTM, UnixTM, LinuxTM, FreeBSDTM, or the like.

Other implementations of the present disclosure will be apparent to those skilled in the art from consideration of the specification and practice of the present disclosure disclosed here. The present disclosure is intended to cover any variations, uses, or adaptations of the present disclosure following the general principles thereof and including the common general knowledge or habitual technical means in the technical field not disclosed in the present disclosure. The specification and embodiments are considered as exemplary only, and a true scope and spirit of the present disclosure is indicated by the appending claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

**Claims**

1. A monitoring method, performed by a User Equipment (UE), and comprising:

   receiving a first type of power saving signal based on a first transceiver of the UE; and
   waking up a second transceiver of the UE based on the first type of power saving signal, and determining a monitoring-related operation.

2. The method according to claim 1, wherein determining the monitoring-related operation comprises at least one of:

   determining to enable monitoring of scheduling information; or
   determining whether to skip monitoring of a second type of power saving signal.

3. The method according to claim 2, wherein the scheduling information comprises at least one of:

   a paging message; or
   Downlink Control Information (DCI).

4. The method according to claim 2 or 3, wherein the second type of power saving signal comprises at least one of:

   Paging Early Indication (PEI); or
   DCI for Powersaving (DCP).

5. The method according to claim 1 or 2, wherein determining the monitoring-related operation comprises one of:

   determining the monitoring-related operation based on a protocol agreement; or
   determining the monitoring-related operation based on a network signaling.

6. The method according to claim 4, wherein determining the monitoring-related operation comprises one of:

   in response to the UE being a non-connected UE supporting the monitoring of the second type of power saving signal, skipping monitoring of the PEI and enabling monitoring of a paging message of a Paging Occasion (PO); or
   in response to the UE being a connected UE supporting the monitoring of the second type of power saving signal, skipping monitoring of the DCP and enabling monitoring of the DCI.

7. The method according to claim 5, wherein the method comprises: receiving the network signaling; and determining the monitoring-related operation based on the network signaling comprises:
   determining, based on first indication information carried in the network signaling, whether to skip the monitoring of the second type of power saving signal.

8. The method according to claim 7, wherein the network signaling comprises:
   a broadcast signaling and/or a dedicated signaling.

9. The method according to claim 5, wherein determining the monitoring-related operation based on the network signaling comprises at least one of:

   determining, based on the network signaling being a first network signaling, to skip the monitoring of the second type of power saving signal and enable the monitoring of the scheduling information; or
   determining, based on the network signaling being a second network signaling, to continue the monitoring of the second type of power saving signal.

10. The method according to claim 1 or 2, wherein determining the monitoring-related operation comprises:
    determining, based on second indication information carried in the first type of power saving signal, whether to skip the monitoring of the second type of power saving signal.

11. The method according to claim 1 or 2, wherein determining the monitoring-related operation comprises at least one of:
    in response to the UE being a UE in a predetermined paging group, determining to skip the monitoring of the second type of power saving signal and enable the monitoring of the scheduling information, wherein the UE in the predetermined paging group comprises at least one of: a grouped UE with a predetermined paging probability; or a grouped UE scrambled with a first Power Saving-Radio Network Temporary Identity (PS-RNTI).

12. A monitoring method, performed by a network device, and comprising:
sending a first type of power saving signal, wherein the first type of power saving signal is used by a User Equipment (UE), based on receiving the first type of power saving signal through a first transceiver, to wake up a second transceiver and determine a monitoring-related operation.

13. The method according to claim 12, wherein determining the monitoring-related operation comprises at least one of:

determining to enable monitoring of scheduling information; or
determining whether to skip monitoring of a second type of power saving signal.

14. The method according to claim 13, wherein the scheduling information comprises at least one of:

a paging message; or
Downlink Control Information (DCI).

15. The method according to claim 13 or 14, wherein the second type of power saving signal comprises at least one of:

Paging Early Indication (PEI); or
DCI for Powersaving (DCP).

16. The method according to claim 12 or 13, wherein:

the first type of power saving signal is used by the UE, upon waking up the second transceiver based on the first type of power saving signal, to determine the monitoring-related operation based on a protocol agreement; or,
the method comprises: sending a network signaling, wherein the network signaling is configured to determine the monitoring-related operation after the second transceiver is woken up by the first type of power saving signal.

17. The method according to claim 15, wherein the first type of power saving signal is used by a non-connected UE supporting the monitoring of the second type of power saving signal, upon waking up the second transceiver, to determine to skip monitoring of the PEI and enable monitoring of a paging message of a Paging Occasion (PO); and/or,
the first type of power saving signal is used by a connected UE supporting the monitoring of the second type of power saving signal, upon waking up the second transceiver, to determine to skip monitoring of the DCP and enable the monitoring of the paging message of the PO.

18. The method according to claim 16, wherein first indication information is carried in the network signaling, and the first indication information is configured to indicate whether to skip the monitoring of the second type of power saving signal.

19. The method according to claim 18, wherein the network signaling comprises:
a broadcast signaling and/or a dedicated signaling.

20. The method according to claim 16, wherein sending the network signaling comprises:

in response to determining that data is to arrive at the UE after the second transceiver is woken up, sending a first network signaling, wherein the first network signaling is used by the UE to skip the monitoring of the second type of power saving signal and enable the monitoring of the scheduling information; or,
in response to failing to determine that the data is to arrive at the UE after the second transceiver is woken up, sending a second network signaling, wherein the second network signaling is used by the UE to determine to continue the monitoring of the second type of power saving signal.

21. The method according to claim 12 or 13, wherein second indication information is carried in the first type of power saving signal, and the second indication information is configured to indicate whether to skip the monitoring of the second type of power saving signal.

22. The method according to claim 12 or 13, wherein determining the monitoring-related operation comprises at least one of:
for a UE in a predetermined paging group, determining to skip the monitoring of the second type of power saving signal and enable the monitoring of the scheduling information, wherein the UE in the predetermined paging group comprises at least one of: a grouped UE with a predetermined paging probability; or a grouped UE scrambled with a first Power Saving-Radio Network Temporary Identity (PS-RNTI).

23. A monitoring apparatus, comprising:

a first receiving module, configured to receive a first type of power saving signal based on a first transceiver of a UE; and
a first processing module, configured to wake up a second transceiver of the UE based on the first type of power saving signal, and determine a monitoring-related operation.

24. A monitoring apparatus, comprising:
a second sending module, configured to send a first type of power saving signal, wherein the first type of power saving signal is used by a User Equipment (UE), based on receiving the first type of power saving signal through a first transceiver, to wake up a second transceiver and determine a monitoring-related operation.

25. A communication device, comprising:

a processor; and
a memory configured to store executable instructions of the processor;
wherein the processor is configured to implement the monitoring method according to any one of claims 1 to 12 or claims 13 to 24 when running the executable instructions.

26. A computer storage medium having a computer executable program stored thereon, wherein the executable program, when executed by a processor, implements the monitoring method according to any one of claims 1 to 12 or claims 13 to 24.

130

FIG. 1

| UE | | Network Device |

S21: Receive a first type of power saving signal based on a first transceiver of the UE

S22: Wake up a second transceiver of the UE based on the first type of power saving signal, and determine a monitoring-related operation

FIG. 2

| UE | | Network Device |

Wireless communication

S31: Determine the monitoring-related operation based on a protocol agreement; or determine the monitoring-related operation based on a network signaling

FIG. 3

| UE | | Network Device |
|---|---|---|

S41: Receive a network signaling

S42: Determine, based on first indication information carried in the network signaling, whether to skip the monitoring of the second type of power saving signal

FIG. 4

| UE | | Network Device |
|---|---|---|

Wireless communication

S51: Determine, based on the network signaling being a first network signaling, to skip the monitoring of the second type of power saving signal and enable the monitoring of the scheduling information; or determine, based on the network signaling being a second network signaling, to continue the monitoring of the second type of power saving signal

FIG. 5

| UE | | Network Device |
|---|---|---|

Wireless communication

S61: In response to the UE being a UE in a predetermined paging group, determine to skip the monitoring of the second type of power saving signal and enable the monitoring of the scheduling information, wherein the UE in the predetermined paging group includes at least one of: a grouped UE with a predetermined paging probability; or a grouped UE scrambled with a first PS-RNTI

FIG. 6

| UE | | Network Device |
|---|---|---|

S71:Send a first type of power saving signal, wherein the first type of power saving signal is used by a User Equipment (UE), based on receiving the first type of power saving signal through a first transceiver, to wake up a second transceiver and determine a monitoring-related operation

FIG. 7

Receiving module 51

First processing module 52

Monitoring apparatus

FIG. 8

Sending module 61

Monitoring apparatus

FIG. 9

804

802    800

Memory

Processing
component

Communication
component

816

806

Power
component

Processor

814

808

820

Multimedia
component

Sensor
component

810

Audio
component

Input/output
interface

812

FIG. 10

900

Processing
component

Power
component

926

922

932

Memory

Network
interface

950

Input/output
interface

958

FIG. 11

## INTERNATIONAL SEARCH REPORT

| International application No. |
| --- |
| **PCT/CN2022/098486** |

| A. | CLASSIFICATION OF SUBJECT MATTER |
| --- | --- |

H04W52/02(2009.01)i

According to International Patent Classification (IPC) or to both national classification and IPC

| B. | FIELDS SEARCHED |
| --- | --- |

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 低功耗, 低能耗, 低功率, 收发机, 接收机, 接收器, 主, 辅, 唤醒, 省电, 节能, 信号, 监听, 监测, 检测, 寻呼, 调度, 下行控制信息, low, power, energy, consume, receiver, wake-up, wake up, save, main radio, secondary, WUS, monitor, detect, paging, schedule, DCI, PEI

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 111757441 A (GUANGDONG OPPO MOBILE COMMUNICATIONS CO., LTD.) 09 October 2020 (2020-10-09) description, paragraphs [0083]-[0210] | 1-26 |
| A | CN 107113726 A (QUALCOMM INC.) 29 August 2017 (2017-08-29) entire document | 1-26 |
| A | CN 107809791 A (ZHUHAI MEIZU TECHNOLOGY CO., LTD.) 16 March 2018 (2018-03-16) entire document | 1-26 |
| A | CN 110754117 A (CONVIDA WIRELESS LLC.) 04 February 2020 (2020-02-04) entire document | 1-26 |
| A | VIVO. "Study on Low-power WUS" *3GPP TSG RAN Meeting #94-e, RP-213265*, 29 November 2021 (2021-11-29), entire document | 1-26 |

☐ Further documents are listed in the continuation of Box C.  ☑ See patent family annex.

| * | Special categories of cited documents: | | |
| --- | --- | --- | --- |
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **15 February 2023** | **07 March 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/098486**

| Patent document cited in search report | | | Publication date (day/month/year) | Patent family member(s) | Publication date (day/month/year) |
|---|---|---|---|---|---|
| CN | 111757441 | A | 09 October 2020 | None | |
| CN | 107113726 | A | 29 August 2017 | None | |
| CN | 107809791 | A | 16 March 2018 | None | |
| CN | 110754117 | A | 04 February 2020 | None | |

Form PCT/ISA/210 (patent family annex) (July 2022)